(19) Europäisches Patentamt
European Patent Office
Office européen des brevets

(11) EP 4 763 804 A1

(12) DEMANDE DE BREVET EUROPEEN

(43) Date de publication:
**24.06.2026 Bulletin 2026/26**

(21) Numéro de dépôt: **25217414.9**

(22) Date de dépôt: **20.11.2025**

(51) Classification Internationale des Brevets (IPC):
***C01B 33/18*** *(2006.01)* ***C09C 1/00*** *(2006.01)*
***C09C 1/30*** *(2006.01)* ***C09C 3/00*** *(2006.01)*
***C09C 3/08*** *(2006.01)* ***C09C 3/12*** *(2006.01)*
***C08K 3/36*** *(2006.01)*

(52) Classification Coopérative des Brevets (CPC):
**C09C 1/3063; C01B 33/18; C08K 3/36; C09C 1/006; C09C 1/3072; C09C 1/3081; C09C 1/309; C09C 3/006; C09C 3/08; C09C 3/12;**
C01P 2004/32; C01P 2004/61; C01P 2004/62

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.12.2024 FR 2415027**

(71) Demandeurs:
- **Stellantis Auto SAS**
  **78300 Poissy (FR)**
- **CNRS - Centre National de la Recherche**
  **75016 Paris (FR)**
- **Materi'Act**
  **92000 Nanterre (FR)**
- **SORBONNE UNIVERSITE**
  **75006 Paris (FR)**

(72) Inventeurs:
- **LAFONT DE SANTENAC, MARIETTE**
  **75019 PARIS (FR)**
- **ROZES, LAURENCE**
  **91800 BRUNOY (FR)**
- **NICOLE, LIONEL**
  **91800 BRUNOY (FR)**
- **TONNELIER, PIERRE**
  **75015 PARIS (FR)**
- **DELALANDE, STEPHANE**
  **91310 LONGPONT SUR ORGE (FR)**
- **DELORY, MATHILDE**
  **69007 LYON (FR)**
- **DEBUISSY, THIBAUD**
  **60000 BEAUVAIS (FR)**
- **DUFRANCATEL, LAURENCE**
  **78810 FEUCHEROLLES (FR)**

(74) Mandataire: **BCIP**
**Stellantis Auto SAS**
**Service REIP - YT800**
**43, rue Jean Pierre Timbaud**
**78300 Poissy (FR)**

(54) **MATERIAU COMPOSITE DE TYPE THERMOPLASTIQUE RETICULE THERMOREPARANT ET THERMODEFORMABLE**

(57) La présente invention concerne un matériau composite comprenant des particules hybrides (1) incorporées dans une matrice polymère thermoplastique, lesdites particules hybrides (1) étant formées de particules inorganiques fonctionnalisées par au moins une molécule (2) portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule (2) étant un organosilane, et au moins un contre-ion et/ou au moins un donneur/accepteur de liaisons hydrogène (3) portant au moins une double liaison C=C, la quantité de paires d'ions et/ou de groupements électronégatifs susceptibles d'être engagés dans la au moins une liaison hydrogène en surface des particules inorganiques étant comprise entre 0,5 et 20% mol par rapport à la quantité de précurseurs des particules inorganiques.

[Fig 1]

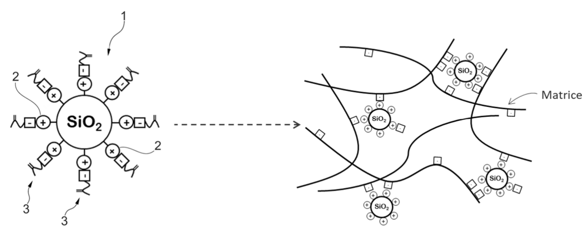


EP 4 763 804 A1

## Description

### Domaine technique

La présente invention se situe dans le domaine de la réticulation dynamique de matériaux thermoplastiques, en particulier de type polyoléfine, par l'utilisation de charges fonctionnalisées. L'invention concerne également un procédé de fabrication de ce type de matériaux.

### Technique antérieure

Actuellement, la réticulation covalente des polyoléfines thermoplastiques est principalement effectuée sur des polyéthylènes, nommés alors PER : Polyéthylènes Réticulés ou PEX (« crosslinked polyethylene » en anglais). Elle est obtenue selon trois voies connues : à l'aide de peroxyde (PER-a), de silane (PER-b) ou de rayonnements ionisants (PER-c).

A cette première famille de polyoléfine, il convient de rajouter la famille des résines commercialisées sous l'appellation Surlyn®. Il s'agit de copolymères entre l'éthylène et l'acide méthacrylique qui sont connus pour leur capacité à être réticulé ioniquement. Ce sont des ionomères, dont les motifs de répétitions ioniques sont des groupements carboxylates neutralisés partiellement par des sels métalliques, généralement le zinc $Zn^{2+}$. Ce copolymère est largement utilisé pour les emballages en cosmétique dû à sa transparence, mais aussi pour les emballages alimentaires, car il présente une bonne étanchéité et n'est pas nocif pour la santé. L'avantage de la réticulation ionique réside dans le caractère réversible des liaisons ioniques à chaud. De ce fait, les ionomères peuvent être remis en forme et sont donc théoriquement recyclables contrairement à des polymères réticulés de manière covalente.

Enfin un autre type de polymères a vu le jour dans les années 2010, impliquant une réticulation des chaines macromoléculaires par des liaisons covalentes organiques réversibles. Ces liaisons sont dynamiques car elles sont engagées dans des réactions chimiques d'échange ou de rupture/reformation, déclenchées par un stimulus externe comme une élévation de la température ou une irradiation lumineuse ou radicalaire. Les polymères basés sur ce type de liaisons sont appelés vitrimères. Ils ont des propriétés mécaniques proches des thermodurcissables tout en gardant la processabilité intrinsèque au thermoplastique et ainsi leur capacité à être remis en forme à de multiples reprises et à être recyclés.

Il convient de préciser que les différents matériaux existants cités ci-dessus peuvent être divisés en deux catégories selon leur type de réticulation : la réticulation avec des liaisons covalentes non réversibles pour les PER et la réticulation dynamique pour les Surlyn, les vitrimères et le ionomère nanocomposite. Le premier type de réticulation est universel dans le sens où il peut s'appliquer à tout type de polyoléfines, mais la réticulation n'est pas réversible ce qui empêche le recyclage de ces matériaux. Le second type présente l'avantage d'avoir une réticulation réversible mais qui est spécifique à un copolymère donné qui peut être une polyoléfine ou non. Les groupes pendants du copolymère peuvent former des liaisons réversibles seulement avec certains agents réticulants, ce qui empêche leur applicabilité à tout type de polyoléfines.

Le document de brevet US 11,370,896 B2 divulgue un ionomère, celui-ci étant un nanocomposite à matrice polyuréthane. Le nanocomposite est constitué de nanoparticules de silice fonctionnalisées avec un groupement anionique de type sulfonate et qui vient se lier/réticuler de manière dynamique à un copolymère PU/PLA portant des groupements cationiques pendants imidazolium. Ce matériau est utilisé sous forme de film et a montré des capacités de réparation et de mémoire de forme thermo-stimulée ainsi qu'une augmentation de son élongation à la rupture et de son module d'Young.

Compte tenu du marché en forte croissance des thermoplastiques, en particulier des polyoléfines, il y a donc nécessité d'en améliorer les propriétés tant mécaniques que de recyclabilité.

### Exposé de l'invention

L'invention a pour objectif de proposer un composite constitué de particules inorganiques et/ou hybrides fonctionnalisées, incorporées dans une matrice polymère de type thermoplastique.

À cet effet, l'invention a pour objet un matériau composite comprenant des particules hybrides incorporées dans une matrice polymère thermoplastique, lesdites particules hybrides étant formées de particules inorganiques fonctionnalisées par au moins une molécule portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule étant un organosilane, et au moins un contre-ion et/ou au moins un donneur/accepteur de liaisons hydrogène portant au moins une double liaison C=C, la quantité de paires d'ions et/ou de groupements électronégatifs susceptibles d'être engagés dans la au moins une liaison hydrogène en surface des particules inorganiques étant comprise entre 0,5 et 20% mol par rapport à la quantité de précurseurs des

particules inorganiques.

Ainsi, le matériau composite hybride obtenu, à base de matrice polymère thermoplastique, présente une ductilité plus importante pour les matrices thermoplastiques et équivalente pour les élastomères. De plus, il présente des propriétés de mémoire de forme et de réparation au-dessus de sa température de fusion $T_f$ sans ou avec peu de perte de stabilité dimensionnelle. Par « peu », on entend ici une perte de moins de 25 %. Typiquement, dans le cadre des matériaux thermoplastiques, une perte de 100 % est observée au-dessus de la température de fusion du matériau. Des défauts superficiels comme des rayures ou des endommagements plus drastiques peuvent être réparés par augmentation locale de la température.

Par « particule hybride », on entend une particule constituée d'un cœur inorganique et d'une surface comportant des molécules organiques.

En outre, l'invention ici présentée a pour avantages :

- L'obtention d'un matériau composite ayant une stabilité dimensionnelle accrue à haute température et ainsi des propriétés mécaniques plus élevées à haute température. A basse température, les propriétés mécaniques, telles que le module d'Young du polymère thermoplastique ou de l'élastomère ne sont que faiblement impactées, c'est-à-dire par exemple que cet impact est inférieur ou égal à 20%, ce qui est un avantage par rapport à l'insertion d'autres types d'agent réticulant qui dégradent de manière plus significative les propriétés mécaniques. Par « basse température », on entend ici une température au-dessus de la température ambiante et pouvant aller jusqu'à la fusion des thermoplastiques semi-cristallins ou jusqu'à la température de transition vitreuse des thermoplastiques amorphes.

- Une augmentation de la durabilité du matériau composite grâce à ses propriétés d'autoréparation.

- Le maintien de la recyclabilité du matériau composite malgré la réticulation dynamique du matériau composite sans perte significative et donc permettant sa réutilisation ultérieure et donc une amélioration de la circularité des thermoplastiques.

- Une conformité aux législations actuelles et futures, notamment européennes sur la recyclabilité des matériaux plastiques et leur réutilisation, par exemple dans l'industrie automobile.

Lesdites particules hybrides sont utilisées comme points de réticulation réversible/dynamique donnant des propriétés de réparation thermostimulée et de mémoire de forme aux matériaux composites à matrice polymère thermoplastique. Ainsi, le matériau composite est un matériau réticulé de façon dynamique.

Les paires d'ions contiennent par définition une quantité stœchiométrique d'anions et de cations. Lesdits anions sont de préférence des sulfonates, des carboxylates, tels que les maléates, les fumarates, les itaconates et les acides gras, des acétates, des bromates, et des chlorates. Lesdits cations sont de préférence des ammoniums, des pyridiniums, des imidazoliums, des hydroniums, et des guanadiniums.

La molécule, portant au moins une fonction ionique impliquée dans au moins une paire d'ions et/ou au moins une fonction électrostatique impliquée dans au moins un groupement électronégatif susceptible d'être engagé dans au moins une liaison hydrogène, est un organosilane. A titre d'exemple, l'organosilane est très préférentiellement une molécule de formule $Si(OR)_3X$, avec R étant de préférence choisi parmi les groupes méthoxy, éthoxy, propoxy, butoxy, et X étant un groupe portant un anion, de préférence de type sulfonate, carboxylate, tels que les maléates, les fumarates, les itaconates et les acides gras, acétates, bromates, et chlorates, ou un cation, de préférence de type ammonium, pyridinium, imidazolium, hydronium, et guanadiniums.

En alternative, l'organosilane peut être une molécule de formule $Si(OR)_2X_2$, avec R étant de préférence choisi parmi les groupes méthoxy, éthoxy, propoxy, butoxy, et X étant un groupe portant un anion, de préférence de type sulfonate, carboxylate, tels que les maléates, les fumarates, les itaconates et les acides gras, acétates, bromates, et chlorates, ou un cation, de préférence de type ammonium, pyridinium, imidazolium, hydronium, et guanadiniums.

Selon une autre alternative, l'organosilane est une molécule de formule $Si(OR)X_3$, avec R étant de préférence choisi parmi les groupes méthoxy, éthoxy, propoxy, butoxy, et X étant un groupe portant un anion, de préférence de type sulfonate, carboxylate, tels que les maléates, les fumarates, les itaconates et les acides gras, acétates, bromates, et chlorates, ou un cation, de préférence de type ammonium, pyridinium, imidazolium, hydronium, et guanadiniums.

Selon un mode de réalisation, ladite molécule ne porte qu'une unique fonction ionique impliquée dans au moins une paire d'ions.

Selon un autre mode de réalisation, ladite molécule ne porte qu'une unique fonction électrostatique impliquée dans au moins un groupement électronégatif susceptible d'être engagé dans au moins une liaison hydrogène.

Selon un autre mode de réalisation, ladite molécule porte une fonction ionique et une fonction électrostatique impliquée dans au moins un groupement électronégatif susceptible d'être engagé dans au moins une liaison hydrogène.

Selon un autre mode de réalisation, ladite molécule porte au moins deux fonctions ioniques.

Selon un autre mode de réalisation, ladite molécule porte au moins deux fonctions électrostatiques impliquées dans au moins deux groupements électronégatifs susceptibles d'être engagés dans au moins deux liaisons hydrogènes.

Selon un autre mode de réalisation, ladite molécule porte au moins deux fonctions ioniques et une fonction électrostatique impliquée dans au moins un groupement électronégatif susceptible d'être engagé dans au moins une liaison hydrogène.

Selon un autre mode de réalisation, ladite molécule porte une fonction ionique et au moins deux fonctions électrostatiques impliquées dans au moins deux groupements électronégatifs susceptibles d'être engagés dans au moins deux liaisons hydrogènes.

Selon un autre mode de réalisation, ladite molécule porte au moins deux fonctions ioniques et au moins deux fonctions électrostatiques impliquées dans au moins deux groupements électronégatifs susceptibles d'être engagés dans au moins deux liaisons hydrogènes.

A titre d'exemples d'organosilane, les plus préférés sont le chlorure d'ammonium de diméthyloctadécyl(3-triméthoxysilyl)-propyle, le chlorure d'ammonium de triméthyl(3-triméthoxylsilyl)-propyle, le chlorure d'ammonium de n,n-didécyl-n-méthyl-n-(3-triméthoxysilyl)-propyle, le chlorure 4-(triméthoxysilyléthyl)benzyltriméthyel, le 3-aminopropyltriéthoxysilane, le 4-aminobutyltriéthoxysilane, le 2-(2-pyridyléthyl)triméthoxysilane, le 2-(4-pyridyléthyl)triéthoxysilane, l'acide 3-(trihydroxysilyl)-1-propanesulfonique, le 3-(guanidinyl)propyltriméthoxysilane, le sel de disodium de carboxyéthylsilanetriol, l'acide 3- (trihydroxysilyl)-1-propanesulfonique et le sel de 3-(trihydroxysilyl)propyl méthylphosphonate sodium.

Le contre-ion et/ou donneur/accepteur de liaisons hydrogène porte au moins une double liaison C=C engagée avantageusement dans la réaction de réticulation de polymères par greffage radicalaire réalisé à l'aide d'un composé de type peroxyde. De cette manière, le polymère et les particules sont connectées par une ou plusieurs liaisons ioniques et/ou électrostatiques. La double liaison C=C peut provenir d'un alcène, tel que les groupes (méth)acrylates, styréniques et vinyliques.

Le contre-ion et/ou donneur/accepteur de liaisons hydrogène peut être choisi dans le groupe constitué par un composé portant un groupe sulfonate, tel que le 3-sulfopropylméthacrylate de potassium ou le 4-vinylbenzènesulfonate de sodium, un composé portant un groupe ammonium, tel que la catécholammonium corynéine, le chlorure de (3-carboxypropyl)triméthylammonium, ou le N,N,N-triméthyl-3-[(2-méthyl-1-oxo-2-propén-1-yl)oxy]-1-propanaminium, un composé portant un groupe carboxylate, tel que l'acide maléique, l'acide méthacrylique ou l'acide acrylique, un composé portant un groupe amine, tel que le 2-(diméthylamino)méthacrylate d'éthyle, le 3-butèn-1-amine, le N-vinylformamide ou le 4-vinylaniline, et un groupe portant un groupe pyridine, tel que la 2-vinylpyridine.

Il convient de préciser par souci de clarté dans le contexte spécifique de l'invention, qu'une liaison hydrogène est une interaction électrostatique entre deux groupes polaires qui se produit lorsqu'un atome d'hydrogène (H) lié par covalence à un atome fortement électronégatif tel que l'azote (N) ou l'oxygène (O) subit le champ électrostatique d'un autre atome fortement électronégatif situé à proximité.

Le nombre de paires d'ions et/ou de groupements électronégatifs pouvant être engagés dans au moins une liaison hydrogène en surface des particules inorganiques est ajusté pour obtenir des propriétés optimales selon la nature chimique des fonctions ioniques. La quantité de paires d'ions en surface est comprise entre 0,5 et 20%mol par rapport à la quantité des précurseurs de particules inorganiques, et de préférence entre 1 et 10%mol.

Les particules utilisées avant fonctionnalisation, nommées particules inorganiques, présentent de préférence un coefficient de sphéricité supérieur ou égal à 0,75, de préférence supérieur ou égal à 0,9. Les particules inorganiques sont très préférentiellement sphériques.

Dans le cadre de cette invention, **il** est entendu que le coefficient de sphéricité d'une particule représente le rapport du plus petit diamètre de la particule au plus grand diamètre de celle-ci. Pour une sphère parfaite, ce rapport est égal à 1.

Lesdites particules inorganiques sont de préférence individualisées.

Par "individualisé", on entend un ensemble de particules dans lequel les particules ne sont pas agrégées, c'est-à-dire que chaque particule de l'ensemble n'est pas liée à d'autres particules par des liaisons chimiques fortes, telles que des liaisons covalentes.

De manière préférée, les particules inorganiques sont individualisées et/ou sphériques.

Les particules inorganiques sont préférentiellement constituées d'un réseau tridimensionnel de silice ($SiO_2$), dont le diamètre est compris entre 0,1 et 100 $\mu$m.

Les particules inorganiques ont de préférence un diamètre compris entre 0,3 et 40 $\mu$m, et encore plus préférentiellement entre 1 et 10 $\mu$m.

Les précurseurs des particules inorganiques sont des précurseurs métallo-organiques, de préférence des précurseurs de silice. Les précurseurs des particules inorganiques de silice sont, par exemple, des chlorures de silicium, tel que le tétrachlorure de silicium, ou des alcoxydes de silicium tels que le tétraéthoxysilane, le tétraméthoxysilane, ou le tétra-n-propoxysilane.

La matrice polymère thermoplastique incorporant les particules hybrides du matériau composite est une polyoléfine.

De préférence, ladite polyoléfine est choisie dans le groupe constitué par le polyéthylène, le polypropylène, le caoutchouc, les copolymères de éthylène/acétate de vinyle EVA, les élastomères thermoplastiques de type POE tels que le poly(éthylène-octène) PEC8 ou le poly(éthène-butène) PEC4, les élastomères EPDM, les élastomères thermoplastiques styréniques à blocs tels que les SBS (polystyrène-b-polybutadiène-b-polystyrène), les SIS (polystyrène-b-polyisoprène-b-polystyrène) ou les SEBS (polystyrène-b-poly(éthylène-butylène)-b-polystyrène), les élastomères NBR (nitrile-butadiene rubber), les élastomères SBR (styrene-butadiene rubber) ou les élastomères SIR (styrene-isoprene rubber), ou leur mélange

Selon un mode de réalisation préféré, les particules inorganiques formant les particules hybrides du matériau composite sont comprises entre 0,5 et 10 % en masse dudit matériau composite, de préférence entre 3 et 8 %, et plus préférentiellement environ égal à 5 %.

Par « environ x % », cela correspond ici à une valeur de x % plus ou moins 0,5 %.

Les précurseurs des particules inorganiques sont des précurseurs métallo-organiques, de préférence des précurseurs de silice. Les précurseurs des particules inorganiques de silice sont, par exemple, des chlorures de silicium, tel que le tétrachlorure de silicium, ou des alcoxydes de silicium tels que le tétraéthoxysilane, le tétraméthoxysilane, ou le tétra-n-propoxysilane.

Lesdites particules inorganiques sont synthétisées par polymérisation inorganique des précurseurs, notamment de silice, suivant les réactions d'hydrolyse et de condensation, effectuées par voie aérosol.

De manière surprenante, ce procédé aérosol permet la synthèse et la fonctionnalisation des particules hybrides de manière concomitante.

L'invention concerne également un procédé de fabrication d'un matériau composite comprenant des particules hybrides, incorporées dans une matrice polymère thermoplastique de l'invention, comprenant les étapes suivantes de :

a) synthèse de particules hybrides, lesdites particules hybrides étant formées de particules inorganiques fonctionnalisées par au moins une molécule portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule étant un organosilane, et au moins un contre-ion et/ou au moins un donneur/accepteur de liaisons hydrogène portant au moins une double liaison C=C, la quantité de paires d'ions et/ou de groupements électronégatifs susceptibles d'être engagés dans la au moins une liaison hydrogène en surface des particules inorganiques étant comprise entre 0,5 et 20% mol par rapport à la quantité de précurseurs des particules inorganiques, lesdites particules ayant diamètre compris entre 0,1 et 100 μm ; et

b) extrusion réactive d'un ensemble comprenant lesdites particules hybrides, un composé de type peroxyde et une matrice polymère thermoplastique, dans laquelle la proportion en particules hybrides est comprise entre 0,5 et 10 % en masse du matériau composite, à une température comprise entre 50°C et 250°C, pour l'obtention dudit matériau composite à matrice polymère thermoplastique.

Selon un mode de réalisation préféré, la proportion en particules hybrides est comprise entre 3 et 8 % en masse du matériau composite, et plus préférentiellement environ égal à 5 %.

Par « environ x % », cela signifie ici une valeur de x % plus ou moins 0,5 %.

D'une manière générale, le principe du procédé de l'invention consiste à venir réticuler de façon réversible une matrice polymère thermoplastique, de préférence de type polyoléfine, au fondu avec des particules hybrides micrométriques fonctionnalisées. Ces particules présentent en surface au moins deux molécules. La première porte une fonction chargée négativement. La seconde porte une fonction chargée positivement, ce qui forme une liaison ionique et/ou électrostatique plus ou moins forte. Cette molécule porte aussi une double liaison C=C qui permet le greffage radicalaire des particules au polymère thermoplastique. De façon alternative, la première molécule peut porter une fonction négative et la seconde positive, cette dernière présentant aussi une double liaison C=C. La liaison ionique et/ou électrostatique à l'interface polymère organique/particules inorganiques apporte le caractère réversible/dynamique donnant auxdits composés composites des propriétés nouvelles, comme indiqué ci-dessus.

Le mélange et/ou la dispersion de l'ensemble comprenant les particules fonctionnalisées hybrides, la matrice polymère thermoplastique, de préférence polyoléfine, et un composé de type peroxyde, ainsi que le greffage desdites particules sur ladite matrice polymère, sont réalisés par extrusion réactive par l'intermédiaire par exemple d'un dispositif de mélangeage tel qu'un mélangeur interne, une extrudeuse monovis, une extrudeuse bivis ou une extrudeuse satellitaire, et de préférence une une extrudeuse bivis. Les particules hybrides et le composé de type peroxyde peuvent être ajoutés dans la zone d'alimentation (la trémie) ou dans une zone de l'extrudeuse où le polymère est déjà à l'état fondu. Les particules hybrides sont dispersées de manière homogène dans la matrice polymère thermoplastique. L'étape de réticulation ionique et/ou électrostatique des particules hybrides se produit en partie lors de la phase d'extrusion. Le

greffage des particules hybrides peut être réalisé dans des infrastructures similaires à celles déjà en fonctionnement pour le greffage des silanes dans le PER-b. La présente invention a pour avantage de permettre la réticulation dynamique des thermoplastiques lors de l'étape d'extrusion réactive ce qui ne nécessite pas de mise en place d'un dispositif supplémentaire.

L'étape a) de synthèse peut être avantageusement effectuée par le procédé suivant, par voie aérosol, comportant les étapes suivantes :

1) Nébulisation, dans un réacteur, d'une première solution hydroalcoolique ou aqueuse contenant un ou plusieurs précurseurs de particules inorganiques, de préférence de silice, de concentration massique comprise entre 0,1 et 20%, et d'une seconde solution alcoolique ou hydroalcoolique comprenant au moins une molécule portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule étant un organosilane, et au moins un contre-ion et/ou au moins un donneur/accepteur de liaisons hydrogène portant au moins une double liaison C=C, la quantité de paires d'ions et/ou de groupements électronégatifs pouvant être engagés dans la au moins une liaison hydrogène étant calculée par rapport à la quantité molaire desdits précurseurs de particules inorganiques variant entre 0,5 et 20%mol, pour obtenir un brouillard de gouttelettes des première et seconde solutions ;

2) Chauffage dudit brouillard à une température comprise entre 50°C et 100°C selon une durée prédéterminée pour la formation de particules inorganiques et l'évaporation du solvant ;

3) Chauffage desdites particules obtenues lors de l'étape 2) à une température de condensation pour la transformation desdits précurseurs en la partie inorganique desdites particules hybrides ;

4) Récupération desdites particules hybrides.

La durée prédéterminée de l'étape 2) est de préférence inférieure ou égale à 10 s, et encore plus préférentiellement inférieure ou égale 5 s.

Par « température de condensation », on entend une température comprise entre 50 et 250 °C, de préférence entre 100 et 200 °C, et encore plus préférentiellement environ égale à 150 °C.

Le procédé de l'invention est un procédé en continu et qui demande un nombre d'étape de préparation limitées. Il permet d'obtenir de façon simple des particules hybrides, non agrégées, et fonctionnalisées, en une seule étape, sans production de déchets, les sous-produits pouvant être recyclés et/ou réutilisés. Ce procédé permet de facilement faire varier l'état de surface des particules hybrides en changeant la nature chimique des molécules présentes et leur quantité. Ainsi, contrairement aux agents réticulants moléculaires, les particules hybrides de la présente invention peuvent être adaptées pour faire varier la dynamique d'échange des liaisons tout en apportant également plusieurs autres propriétés dues à la nature des composés utilisés (anti-UV, magnétisme, coloration, etc.).

Les particules inorganiques sont synthétisées et fonctionnalisées en une seule étape et par voie aérosol pour former des particules hybrides selon l'invention. Ce procédé de synthèse implique une première étape d'atomisation de solutions en gouttelettes qui sont chauffées pour être transformées en particules solides individuelles.

Selon un mode de réalisation, la première solution est une solution aqueuse ou hydroalcoolique, de pH compris entre 2 et 4. De préférence, la première solution est une solution aqueuse.

La seconde solution est avantageusement une solution aqueuse, alcoolique pure ou hydroalcoolique, cette seconde solution pouvant être le méthanol, l'éthanol ou le propanol lorsqu'elle contient un alcool, sans être limité à ces exemples d'alcool.

Selon un mode de réalisation, dans le cas d'utilisation de silice, les précurseurs de silice sont des chlorures de silicium, tels que le tétrachlorure de silicium, ou des alcoxydes de silicium, tels que le tétraéthoxysilane, le tétraméthoxysilane, ou le tétra-n-propoxysilane.

Selon un mode de réalisation, les précurseurs de particules inorganiques (non fonctionnalisées) sont celles citées précédemment.

La quantité de paires d'ions et/ou de groupements électronégatifs pouvant être engagés dans la au moins une liaison hydrogène de l'étape a) est de préférence comprise entre 0,5 et 10%mol, et encore plus préférentiellement entre 0,8% et 3%mol par rapport à la quantité de précurseurs de particules inorganiques.

Les autres composés ou groupes, tels que les paires d'ions, le contre-ion, les molécules, les organosilanes, etc ; impliqués dans le procédé sont tels que définis plus haut.

Selon un mode de réalisation alternatif à l'étape 1), les première et seconde solutions forment une solution unique de précurseurs inorganiques et de paires d'ions et/ou de groupements électronégatifs susceptibles d'être engagés dans au moins une liaison hydrogène. Ladite solution unique contient dans ce cas-là une quantité juste nécessaire

d'alcool pour permettre la dissolution des paires d'ions et/ou des groupements électronégatifs susceptibles d'être engagés dans au moins une liaison hydrogène.

Selon un mode de réalisation, dans le cas des deux solutions distinctes (première et seconde solutions), elles sont nébulisées en même temps et elles se rencontrent à la sortie d'une buse de nébulisation d'un dispositif d'atomisation. Dans ce cas-là, la solution contenant le précurseur inorganique est nébulisée au centre de la solution contenant la molécule portant au moins la paire d'ions et/ou au moins le groupement électronégatif susceptible d'être engagé dans au moins une liaison hydrogène.

Le procédé peut être mis avantageusement en œuvre par un dispositif d'atomisation, par voie aérosol, disponible dans le commerce, tel qu'un réacteur ou atomiseur Büchi-B290. Un tel atomiseur comprend les éléments principaux suivants : un dispositif d'aspiration de solution(s) via une pompe péristaltique, une entrée de gaz comprimé, un module de chauffage, une buse d'atomisation, un cylindre de séchage et un récipient de récupération.

La buse d'atomisation peut-être de différents agencements classiques, de type double, triple ou plus de buses, pour la synthèse de particules hybrides formées de particules inorganiques présentant un coefficient de sphéricité supérieur ou égal à 0,75 et/ou un diamètre moyen compris entre 0,1 et 100 $\mu$m.

Selon un mode de réalisation, le procédé peut avantageusement comprendre une étape d'agitation pendant une durée allant de 10 min à 48 h, avant la nébulisation de l'étape 1) afin d'hydrolyser les précurseurs de particules inorganiques à réseau tridimensionnel.

De préférence, le temps de l'étape d'agitation est compris entre 10h et 24h pour une solution à pH 2, ou entre 30 min et 2h pour une solution à pH 3.

Le procédé peut comprendre, avant l'étape 1) de nébulisation et après l'étape d'agitation, une étape classique d'aspiration de la ou des solutions définies ci-dessus vers une buse d'atomisation d'un atomiseur par l'intermédiaire d'un gaz comprimé chauffé par un module de chauffage.

Ladite étape d'aspiration est réalisée typiquement par une pompe péristaltique, un pousse-seringue ou tout autre élément remplissant cette fonction.

Selon un mode de réalisation A, les particules inorganiques sont fonctionnalisées, par co-condensation des groupements organosilanes et des précurseurs de silice par voie aérosol, avec un groupement organosilane portant une fonction ammonium quaternaire. L'ammonium quaternaire peut être lié à une chaîne carbonée, cette chaîne carbonée pouvant être une chaîne de 1 à 18 carbones, de préférence de 10 à 18 carbones. Le contre-ion est dans ce cas un sulfonate, un carboxylate, un acétate, un bromate ou un chlorate porté par une molécule qui a aussi une double liaison C=C, comme le 3-sulfopropylméthacrylate de potassium ou le 4-vinylbenzenesulfonate de sodium dans le cas d'un sulfonate. Cette double liaison peut provenir d'un alcène tel que les groupes styrène, (méth)acrylate ou encore vinylique. De façon alternative, le groupement organosilane peut porter une fonction sulfonate et le contre-ion peut être un ammonium quaternaire lié à une double liaison C=C. Préférentiellement, le groupement organosilane est le chlorure d'ammonium de dimethyloctadécyle (3-triméthoxysilyl) propyle portant un ammonium quaternaire et une longue chaîne carbonée, et le contre-ion est le 3-sulfopropylméthacrylate de potassium, portant un anion sulfonate et une fonction méthacrylate :

[Chem 1]

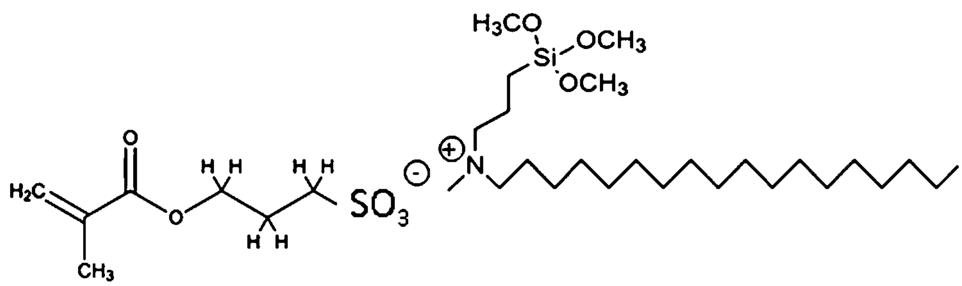

De la même façon, la paire d'ions peut être réalisée entre le N,N,N-triméthyl-3-[(2-méthyl-1-oxo-2-propén-1-yl) oxy]-1-propanaminium et l'acide 3-(trihydroxysilyl)-1-propanesulfonique :

[Chem 2]

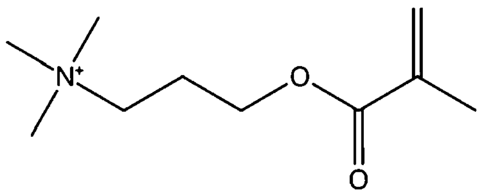
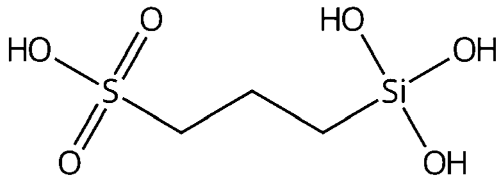

Selon un autre mode de réalisation B, les particules inorganiques peuvent être fonctionnalisées par un groupement organosilane portant une fonction amine primaire sous forme acide ($NH_3^+$) et dont le contre-ion porte une fonction carboxylate ainsi qu'une double liaison C=C, par exemple un acide maléique sous sa forme maléate. De même, les groupements ioniques peuvent être inversés. Il est possible d'avoir un groupement organosilane portant une fonction carboxylate et son contre-ion étant une amine portant aussi une double liaison C=C. Préférentiellement, le groupement organosilane est le 3-aminopropyltriéthoxysilane et le contre-ion est l'acide maléique :

[Chem 3]

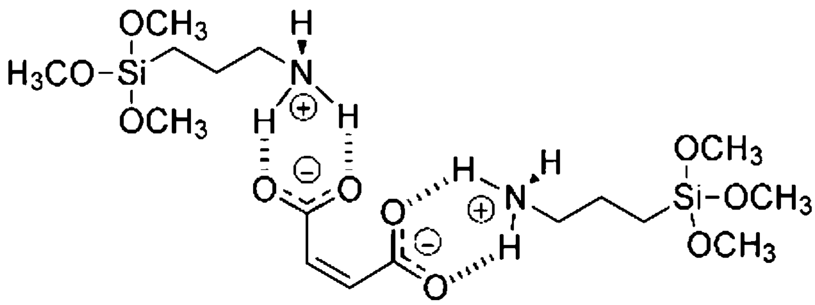

Selon un mode de réalisation C, la surface des particules inorganiques peut comprendre une ou plusieurs liaisons hydrogène. Dans ces cas-là, le groupement organosilane, lié de manière covalente à la particule, porte une fonction pyridine. L'azote de la fonction pyridine est alors engagée dans une liaison hydrogène avec l'hydrogène d'une fonction carboxylique. La fonction carboxylique est portée par une molécule qui présente aussi une double liaison C=C. Le groupement organosilane peut porter la fonction carboxylique et la molécule portant la double liaison C=C comportant aussi une pyridine. Préférentiellement, le groupement organosilane est le 2-(2-pyridylethyl)triméthoxysilane et la molécule portant à la fois l'acide carboxylique et la double liaison C=C est l'acide maléique :

[Chem 4]

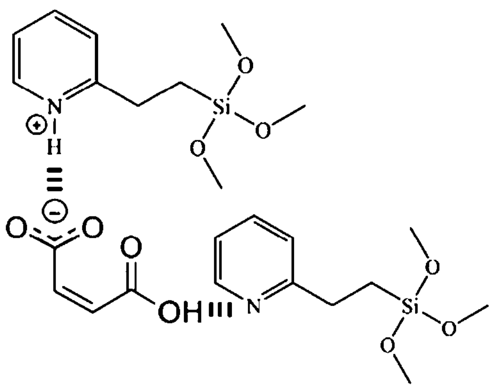

En variante, avant l'étape b), le procédé de l'invention peut comprendre une étape de mélange dudit ensemble, puis une étape d'introduction dudit mélange dans un dispositif d'extrusion pour une extrusion réactive.

Le composé de type peroxyde peut être classiquement le peroxyde de dicumyle.

En alternative, le peroxyde pourrait être choisi parmi le peroxyde de dilauroyle, le

peroxyde de di(3,5,5-triméthylhexanoyle), le di(2-éthylhexyl)peroxydicarbonate, le peroxyde de di-tert-amyle, le tert-butyl peroxy-3,5,5-triméthylhexanoate, le peroxyneodecanoate de 3-hydroperoxy-1,1-diméthylbutyl , le monoperoxycarbonate de 00-tert-butyl-0-2-isopropy, le bis[1-(tert-butylperoxy)-1-méthyléthyl]benzene, le 1,1-Bis(tert-butylperoxy)cyclohexane, le carbonate de tert-butylperoxy 2-éthylhexyle ou le peroxybenzoate de tert-butyle. Selon un mode de réalisation de l'étape b), l'extrusion réactive peut être mise en œuvre par un mélangeur interne, les bipales pouvant être en rotation à 30 rpm - 100 rpm, de préférence à 40 rpm - 60 rpm. L'introduction du mélange peut être effectuée en deux fois, espacées de 1-10 min. La vitesse des pales est augmentée à 60 rpm - 100 rpm. Après environ 15 - 25 min, le matériau composite est extrait.

Selon un mode de réalisation, le procédé de l'invention peut comprendre une étape c) de mise en forme par compression, après l'étape b), par un dispositif de presse classique, pour avantageusement compléter la réticulation et/ou augmenter le rendement de réticulation, sous l'action de la pression et de la chaleur. La pression peut être typiquement de 150-200 bar et la température peut être comprise entre 100°C et 200°C, en fonction de la nature du matériau composite.

Les différentes définitions et données pour le matériau composite et les modes de réalisation préférentiels définis pour le matériau composite s'appliquent au procédé de l'invention.

Les autres composés ou groupes, tels que les paires d'ions, le contre-ion, les molécules, les organosilanes etc ; impliqués dans le procédé sont définis plus haut.

Selon un mode de réalisation, la proportion en composé de type peroxyde est inférieure à 1 % en masse du matériau composite, de préférence entre 0,4 et 0,5 %.

La présente invention concerne également un véhicule automobile comprenant au moins un élément, ledit élément étant obtenu à partir d'un matériau composite selon l'invention.

La présente invention vise donc de combiner les avantages des deux types de réticulation précédents, dans un même matériau. En effet, elle permet de réticuler les thermoplastiques, en particulier toutes les familles de polyoléfines, de façon universelle et de façon réversible, ce qui favorise leur recyclabilité, améliore leurs propriétés mécaniques, leur tenue thermique et température d'usage. En outre, la présente invention vise à améliorer des propriétés mécaniques à haute température des thermoplastiques, d'allonger leur durée de vie, d'accroitre l'indice de réparabilité des pièces automobiles concernées et ainsi diminuer la quantité de déchets produits par l'industrie automobile.

De plus, l'invention permet de répondre plus facilement aux directives européennes nécessitant une revalorisation de 95% des composants des véhicules automobiles hors d'usage (directive 2000/53/CE).

De manière surprenante, le matériau composite selon la présente invention a une stabilité dimensionnelle supérieure ou égale à 75 %, après la température de fusion $T_f$ de matrices polymères polyoléfines.

De manière totalement inattendue, le matériau composite selon la présente invention a une valeur du module de conservation au plateau caoutchoutique, après la température de fusion de matrices polymères polyoléfines, différente de 0.

Ces deux critères montrent le caractère d'auto-réparabilité du matériau composite de l'invention.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles

## Brève description des dessins

[Fig 1] est une représentation schématique du matériau composite selon un mode de réalisation de l'invention ;

[Fig. 2] représente un exemple d'un dispositif d'atomisation (atomiseur) pour la production de particules hybrides incorporées dans une matrice polymère thermoplastique.

[Fig 3] montre les différentes stabilités dimensionnelles d'un exemple de matériau hybride de l'invention.

## Description détaillée

Exemple 1

La Fig.1 représente un exemple de matériau composite selon l'invention.

Le matériau composite comporte des particules hybrides sphériques micrométriques de silice ($SiO_2$) fonctionnalisées 1 (illustrés à la partie gauche de la figure 1). Ces particules présentent en surface deux molécules. La première, 2, porte une fonction chargée négativement. La seconde 3 porte une fonction chargée positivement, ce qui forme une liaison ionique et/ou électrostatique plus ou moins forte. Cette molécule porte aussi une double liaison C=C qui permet le greffage

radicalaire (illustré par la flèche en pointillés) des particules à une matrice polymère polyoléfine avec le peroxyde de dicumyle (DCP). De façon alternative, la première molécule peut porter une fonction négative et la seconde positive, cette dernière possédant aussi une double liaison C=C. On obtient alors un matériau composite hybride réticulé dynamiquement (en référence à la partie droite de la figure 1).

Exemple 2 :

Un exemple de dispositif d'atomisation 4 est donné à la figure 2, destiné à la production de particules hybrides.

Il comprend les éléments principaux qui suivent : un dispositif d'aspiration de solution(s) via une pompe péristallique 6, une entrée de gaz comprimé 8 (température d'entrée), une évacuation de gaz 9, un module de chauffage 10, une buse d'atomisation 12, un cylindre de séchage 14, un récipient de récupération 16, un dispositif de cyclone 18, et une sonde de température 20 (température de sortie).

Un procédé de fabrication de particules hybrides comporte des étapes d'aspiration de la ou des solutions de précurseurs et de paires d'ions par la pompe péristallique 6 vers la buse d'atomisation 12 par l'intermédiaire d'un gaz comprimé chauffé par le module de chauffage 10 (zones E et F de la figure 2). Une étape d'atomisation de la ou des solutions de précurseurs et de paires-d'ions en gouttelettes est montrée en zone G, suivie d'une étape de séchage des gouttelettes dans le cylindre de séchage 14, comme montrée en zone H. Après cette étape de séchage, a lieu une étape de récupération des particules fonctionnalisées 1 (zone I), le flux en sortie de la zone H étant dirigé vers le dispositif de cyclone 18, les gaz étant évacués par l'évacuation de gaz 9 en amont dudit dispositif de cyclone 18, et les particules fonctionnalisées 1 sont recueillies.

Les étapes 1), 2) et 3) du procédé correspondent aux zones G et H du dispositif (nébulisation-séchage). L'étape 4) correspond à la zone I (récupération de particules).

Exemple 3 :

Dans le cas du mode de réalisation A, le procédé fabrication de particules hybrides est mis en œuvre comme suit.

La synthèse des particules hybrides est effectuée par voie aérosol. Pour cela, la paire d'ions est préparée en mélangeant en quantité stœchiométrique d'anion et de cation dans du méthanol. Une seconde solution aqueuse acidifiée à pH=2 est préparée contenant du tétraéthoxysilane TEOS permettant d'atteindre une concentration de 1% massique en silice. Cette solution est laissée sous agitation pendant 8 heures afin d'hydrolyser le TEOS. La paire d'ions est ensuite ajoutée dans cette solution de TEOS. Entre 0,5%mol et 20%mol de paires d'ions sont ajoutés par rapport à la quantité de TEOS. Ce mélange est nébulisé dans un réacteur atomiseur Büchi-B290. Ce réacteur est chauffé à 150°C en entrée ce qui correspond à une température de sortie de 90°C environ. Le débit de la solution nébulisée est de 1,5 mL/min, le flux d'air permettant la nébulisation correspond à un débit de 740 L/h. Enfin, le flux d'air permettant de récupérer les particules est fixé à 27 $m^3$/h.

Dans le cas du mode de réalisation B, le procédé fabrication de particules hybrides est mis en œuvre comme suit.

Les particules hybrides sont synthétisées par aérosol mais selon deux protocoles différents : soit par nébulisation d'une solution à pH=3 contenant le TEOS et la paire d'ions, soit par la nébulisation de deux solutions, l'une contenant le TEOS et l'autre la paire d'ions. Dans les deux cas, la paire d'ions est préparée en mélangeant en quantité stœchiométrique d'anion et de cation dans du méthanol.

Puis, dans le premier cas, une solution aqueuse acidifiée à pH=3 est préparée, contenant du tétraéthoxysilane TEOS permettant d'atteindre une concentration de 1%massique en silice. Cette solution est laissée sous agitation pendant 45min - 1h afin d'hydrolyser le TEOS. La paire d'ions est ensuite ajoutée dans cette solution de TEOS. Entre 0,5% mol et 10%mol de paires d'ions sont ajoutés par rapport à la quantité de TEOS. Ce mélange est nébulisé dans un réacteur atomiseur Büchi-B290. Ce réacteur est chauffé à 150°C en entrée ce qui correspond à une température de sortie de 90°C environ pour un taux molaire de paires d'ions inférieure à 5%mol sinon le réacteur est chauffé à 50°C soit une température en sortie d'environ 35°C. Le débit de la solution nébulisée est de 1,5 mL/min, le flux d'air permettant la nébulisation correspond à un débit de 740 L/h. Enfin le flux d'air permettant de récupérer les particules est fixé à 27 $m^3$/h.

Dans le second cas, une solution aqueuse A, acidifiée à pH=2, est préparée contenant du tétraéthoxysilane TEOS permettant d'atteindre une concentration de 1%massique en silice. Cette solution est laissée sous agitation pendant 8h afin d'hydrolyser le TEOS. La paire d'ions est ajoutée dans une solution B composée à 75%vol d'éthanol absolue et 25%vol d'eau distillée. La quantité de paire-d'ions est calculée afin de correspondre à un taux molaire entre 1% et 6% par rapport à la quantité de TEOS de la solution A. Ces deux solutions sont nébulisées dans un réacteur atomiseur Büchi-B290, à l'aide d'une buse constituée de 3 canaux concentriques imbriqués. La solution A est nébulisée dans le canal central à un débit de 1,5 mL/min. La solution B est nébulisée dans le canal entourant le canal central, avec un débit de 0,75 mL/min. Enfin le canal extérieur permet la circulation de l'air à un débit de 740 L/h. Le réacteur est chauffé à 150°C. Le flux d'air permettant de récupérer les particules est fixé à 27 $m^3$/h.

Dans le cas du mode de réalisation C, le procédé fabrication de particules hybrides est mis en œuvre comme suit.

Les particules hybrides sont synthétisées par aérosol, en nébulisant deux solutions, l'une contenant le TEOS et l'autre les molécules interagissant par liaison hydrogène. Les paramètres de ce procédé sont équivalents au deuxième cas décrit précédemment pour le mode de réalisation B.

Exemple 4, Exemples 4.1-4.11

Thermoréparations pour des exemples de matériaux composites hybrides Prérequis nécessaire à la thermoréparation :
$E'_{Tf+30°C}$ > 0 MPa E' correspond à la valeur du module de conservation au plateau caoutchoutique après une température de 30 °C au-dessus de la température de fusion $T_f$, mesurée en DMTA (Dynamic Mechanical Thermal Analysis en anglais). Cette valeur rend compte de la densité de réticulation d'un matériau composite hybride. C'est un critère discriminant quant à la nature même du phénomène. Si le matériau n'est pas réticulé, alors il se réparera dû à son caractère thermoplastique et non dû à la dynamique des liaisons. Il permet ainsi de se rendre compte de l'impact de la densité de réticulation sur l'efficacité de réparation.
SD ≥ 75% SD correspond à la stabilité dimensionnelle d'un exemple de matériau composite hybride. Ce critère permet d'estimer la capacité du matériau à être réparé tout en gardant sa forme d'origine, ce qui est important dans une perspective de réparation superficielle sans pression. C'est un critère qualitatif et visuel qui rend compte de la différence de forme d'un échantillon avant et après traitement thermique à 30 °C au-dessus de la température de fusion pendant 1h30 dans une étuve. Lorsque le matériau garde sa forme, alors SD est de 100 %. S'il commence à se contracter, la SD varie entre 75 et 50 %. Enfin si l'échantillon a coulé, se dégrade (il brunit) ou s'est totalement contracté, alors SD vaut 0 %.
La Figure 3 présente les exemples utilisés comme référence .
Le Tableau 1 présente les critères et les résultats de thermoréparation d'exemples de matériaux hybrides (Exemples 4.1-4.11), dans lequel

Nature chimique des molécules organiques formant la paire d'ions (PI)

α: organosilane

β : Contre ion et/ou donneur/accepteur de liaison hydrogène, portant une double liaison C=C

α1 : NC18+ = Chlorure de diméthyloctadécyl[3-(trimethoxysilyl)propyl] ammonium

α2 : NC+ = chlorure d'ammonium de trimethyl(3-trimethoxylilyl)-propyl

α3 : APTES = 3-Aminopropyltriethoxysilane

α4 : Si Pyridyne = 2-(2-Pyridylethyl)trimethoxysilane,

SO3- = 3-sulfopropylméthacrylate de potassium

styrSO3- = sodium 4-vinylbenzenesulfonate

Acide maléique

Nature chimique du polymère

PEHD : polyéthylène haute densité

PEBD : polyéthylène basse densité

PEC8 : Elastomère POE de poly(éthylène octène)

EVA : copolymère éthylène/acétate de vinyle

Résultats expérimentaux

$\eta E_{1h30}$ : efficacité de réparation du module d'Young après 1h30 de traitement thermique

$\eta\ \varepsilon_{rupture\ 1h30}$ : efficacité de réparation de l'élongation à la rupture après 1h30 de traitement thermique

SD et E' sont définis à l'exemple 4.

Les efficacités de réparation du module d'Young $\eta E$ et de l'élongation à la rupture $\eta\ \varepsilon_{rupture}$ après un traitement thermique de 1h30 ont été déterminées à l'aide de tests de traction. Afin de valider une efficacité de réparation, il a été estimé que l'un des paramètres du module d'Young $\eta E$ ou de l'élongation à la rupture $\eta\ \varepsilon_{rupture}$ devait être supérieur ou égal à 80%. Pour s'affranchir des conditions de mise en forme, les propriétés mécaniques des éprouvettes endommagées sont comparées aux propriétés mécaniques d'éprouvettes provenant de la partie non endommagée de la même plaque, qui aura donc subit les mêmes sollicitations thermiques et mécaniques. L'efficacité de réparation pour une propriété est calculée d'après l'équation suivante :

$$\eta\ (\%) = \frac{K_{réparé}}{K_{référence}} \times 100$$

avec $K_{réparé}$ : une propriété spécifique du matériau réparé

$K_{référence}$ : la même propriété pour un échantillon non endommagé du même matériau

De manière surprenante, le matériau composite selon la présente invention a une stabilité dimensionnelle supérieure ou égale à 75 %, après la température de fusion de matrice polymères polyoléfines.

De manière totalement inattendue, le matériau composite selon la présente invention a une valeur du module de conservation au plateau caoutchoutique, après la température de fusion des polyoléfines, différente de 0.

Exemple 5 :

5 g de particules hybrides et 450 mg de peroxyde de dicumyle sont ajoutés dans 100 g de polyoléfine. Cet ensemble est introduit dans un mélangeur interne chauffé à 160°C et dont les bipales tournent à 50 rpm. L'introduction de l'ensemble est effectuée en deux fois, espacées de 5 min. La vitesse des pales est augmentée à 100 rpm au bout de 10min, puis après 18min le polymère au fondu est extrait. Il est ensuite pressé à 200 bar pendant 1h30.

Ces polyoléfines une fois hybridées montrent une réticulation réversible dans le sens où des propriétés d'autoréparation thermostimulées sont observées. Après rupture complète et réparation sous presse, les matériaux composites hybrides se réparent après 1h30 avec une efficacité de réparation supérieure ou égale à 80%.

Les conditions thermiques sous presse de cette auto-réparation sont :

- à 80°C pour les hybrides à matrice PEC8 et EVA ;
- à 120°C pour les hybrides à matrice PEBD ;
- à 150°C pour les hybrides à matrice PEHD.

Avantageusement, le matériau composite selon la présente invention, est utilisé pour fabriquer un ou plusieurs éléments dudit véhicule automobile, notamment des pièces plastiques d'intérieur ou d'extérieur, par exemple, le tableau de bord, les portières, des garnitures de décorations, etc.

[Tableau 1]

| | Paramètres de la réaction | | | | | Réparation | Résultats de la réaction | | | |
|---|---|---|---|---|---|---|---|---|---|---|
| | Nature chimique PI et particules | | | Taille de particules | Nature chimique polymère | Température réparation | E' à Tf + 30°C | SD | $\eta E_{1h30}$ | $\eta\ \varepsilon_{rupture}$ 1h30 |
| | α | β | N (% molSi) | Diamètre moyen (μm) | | (°C) | en kPa | en % | en % | en % |
| Exemple 4.1 | α1 | β1 | 4.9 | 2.8 | PEHD | 150°C | 64±23 | 100% | 119% | 100% |
| Exemple 4.2 | α1 | β1 | 6.6 | 2.2 | PEHD | 150°C | 229±33 | 100% | 101% | 100% |
| Exemple 4.3 | α2 | β1 | 3.5 | 3 | PEHD | 150°C | 40±24 | 100% | 94% | 396% |
| Exemple 4.4 | α3 | β3 | 3 | 2.5 | PEHD | 150°C | 150±36 | 75% | 97% | 117% |
| Exemple 4.5 | α3 | β3 | 4.5 | 1.7 | PEHD | 150°C | 198±48 | 75% | 84% | 106% |
| Exemple 4.6 | α3 | β3 | 6.1 | 4.3 | PEHD | 150°C | 133±36 | 75% | 185% | 18% |
| Exemple 4.7 | α3 | β3 | 3.2 | 1.6 | PEHD | 150°C | 158±36 | 100% | 85% | 89% |
| Exemple 4.8 | α4 | β3 | 4.4 | 3.5 | PEHD | 150°C | 107±40 | 75% | 111% | 280% |
| Exemple 4.9 | α1 | β1 | 6.6 | 2.2 | PEBD | 120°C | 57±9 | 100% | 73% | 100% |
| Exemple 4.10 | α1 | β1 | 6.6 | 2.2 | PEC8 | 80°C | 310±10 | 100% | 100% | 94% |
| Exemple 4.11 | α1 | β1 | 6.6 | 2.2 | EVA | 65°C | 504±36 | 100% | 118% | 66% |

## Revendications

1. Matériau composite comprenant des particules hybrides (1) incorporées dans une matrice polymère thermoplastique, lesdites particules hybrides (1) étant formées de particules inorganiques fonctionnalisées par au moins une molécule (2) portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule (2) étant un organosilane, et au moins un contre-ion et/ou au moins un donneur/accepteur de liaisons hydrogène (3) portant au moins une double liaison C=C, la quantité de paires d'ions et/ou de groupements électronégatifs susceptibles d'être engagés dans la au moins une liaison hydrogène en surface des particules inorganiques étant comprise entre 0,5 et 20% mol par rapport à la quantité de précurseurs des particules inorganiques.

2. Matériau composite selon la revendication 1, dans lequel la matrice de polymère thermoplastique est une polyoléfine, de préférence choisie dans le groupe constitué par le polyéthylène, le polypropylène, le caoutchouc, les copolymères de éthylène/acétate de vinyle EVA, les élastomères thermoplastiques de type POE tels que le poly(éthylène-octène) PEC8 ou le poly(éthène-butène) PEC4, les élastomères EPDM, les élastomères thermoplastiques styréniques à blocs tels que les SBS (polystyrène-b-polybutadiène-b-polystyrène), les SIS (polystyrène-b-polyisoprène-b-polystyrène) ou les SEBS (polystyrène-b-poly(éthylène-butylène)-b-polystyrène), les élastomères NBR (nitrile-butadiene rubber), les élastomères SBR (styrene-butadiene rubber) ou les élastomères SIR (styrene-isoprene rubber), ou leur mélange.

3. Particules hybrides (1) selon la revendication 1, dans lesquelles les particules inorganiques présentent un coefficient de sphéricité supérieur ou égal à 0,75, de préférence supérieur ou égal à 0,9 ou sont sphériques.

4. Matériau composite selon l'une des revendications 1 à 3, dans lequel les particules inorganiques sont constituées d'un réseau tridimensionnel de silice ($SiO_2$), dont le diamètre moyen est compris entre 0,1 et 100 μm, de préférence entre 0,3 et 40 μm, encore plus préférentiellement entre 1 et 10 μm.

5. Matériau composite selon l'une des revendications précédentes, dans lequel les particules inorganiques sont comprises entre 0,5 et 10 % en masse du matériau composite, de préférence entre 3 et 8 %, et plus préférentiellement environ égal à 5 %.

6. Matériau composite selon l'une des revendications 2 à 5, dans lequel le matériau composite a une stabilité dimensionnelle supérieure ou égale à 75 %, après la température de fusion de matrices polymères polyoléfines.

7. Matériau composite selon l'une des revendications 2 à 6, dans lequel le matériau composite a une valeur du module de conservation au plateau caoutchoutique, après la température de fusion de matrices polymères de polyoléfine, différente de 0.

8. Procédé de fabrication d'un matériau composite comprenant des particules hybrides (1), telles que définies selon l'une des revendications 1 à 7, incorporées dans une matrice polymère thermoplastique, comprenant les étapes suivantes de :

a) synthèse de particules hybrides (1), lesdites particules hybrides (1) étant formées de particules inorganiques fonctionnalisées par au moins une molécule (2) portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule (2) étant un organosilane, et au moins un contre-ion et/ou au moins un donneur/accepteur de liaisons hydrogène (3) portant au moins une double liaison C=C, la quantité de paires d'ions et/ou de groupements électronégatifs susceptibles d'être engagés dans la au moins une liaison hydrogène en surface des particules inorganiques étant comprise entre 0,5 et 20% mol par rapport à la quantité de précurseurs des particules inorganiques, lesdites particules ayant diamètre compris entre 0,1 et 100 μm ; et
b) extrusion réactive d'un ensemble comprenant lesdites particules hybrides (1), un composé de type peroxyde et une matrice polymère thermoplastique, dans laquelle la proportion en particules hybrides (1) est comprise entre 0,5 et 10 % en masse du matériau composite, à une température comprise entre 50°C et 250°C, pour l'obtention dudit matériau composite à matrice polymère thermoplastique.

9. Procédé selon la revendication 8, dans lequel la proportion en composé de type peroxyde est inférieure à 1 % en masse du matériau composite, de préférence entre 0,4 et 0,5 %.

10. Véhicule automobile comprenant au moins un matériau composite selon l'une des revendications 1 à 7, ou tel qu'obtenu selon le procédé de l'une des revendications 8 à 9.

[Fig 1]

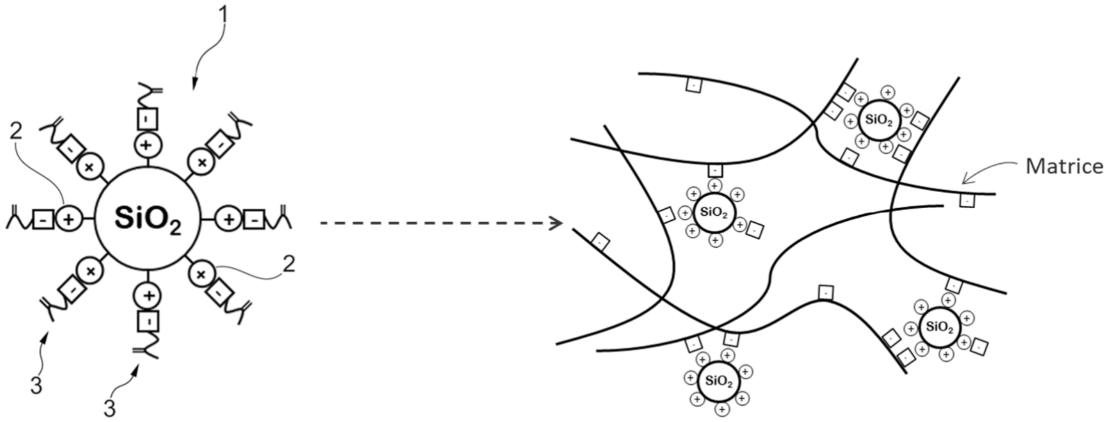


[Fig 2]

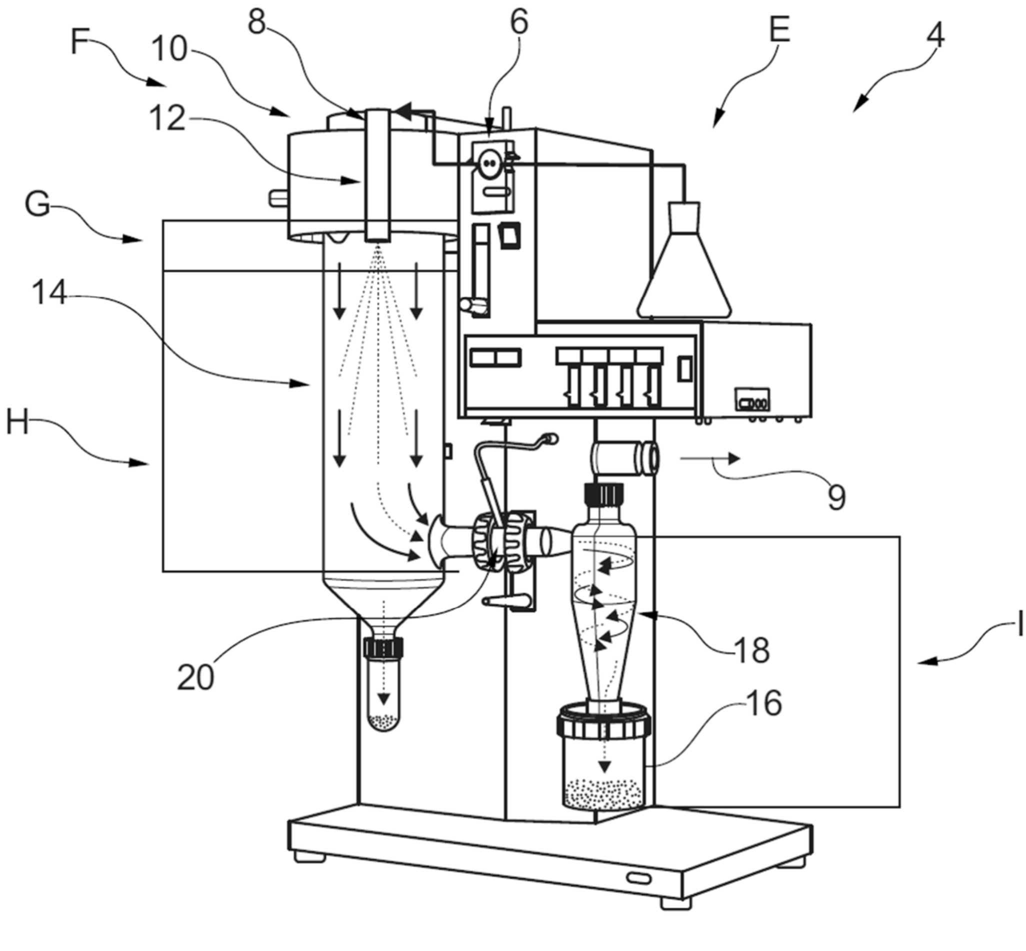

[Fig 3]

| | | | |
|---|---|---|---|
| 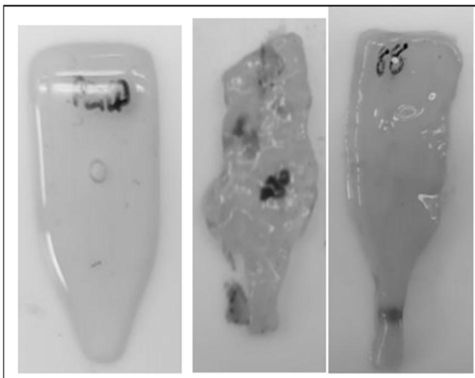 | 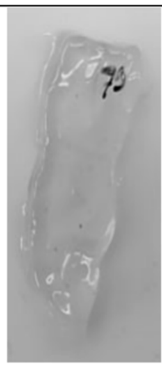 | 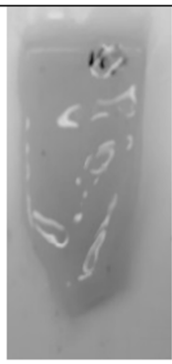 | 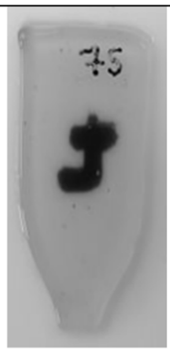 |
| SD = 0% | SD = 50% | SD = 75% | SD = 100% |

Europäisches Patentamt
European Patent Office
Office européen des brevets

# RAPPORT DE RECHERCHE EUROPEENNE

Numéro de la demande
EP 25 21 7414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | VIDAL LORENA ET AL: "Ionic liquid-functionalized silica for selective solid-phase extraction of organic acids, amines and aldehydes", JOURNAL OF CHROMATOGRAPHY A , vol. 1226 1 février 2012 (2012-02-01), pages 2-10, XP093283803, AMSTERDAM, NL ISSN: 0021-9673, DOI: 10.1016/j.chroma.2011.08.075 Extrait de l'Internet: URL:https://pdf.sciencedirectassets.com/271409/1-s2.0-S0021967312X00074/1-s2.0-S0021967311012854/main.pdf?hash=618036a4075e1a8d67181d2d35559a0910deef85c7bcaca25bd0cde449405235&host=68042c943591013ac2b2430a89b270f6af2c76d8dfd086a07176afe7c76c2c61&pii=S0021967311012854&tid=spdf-ed5ee8ea-a972-4fd5-9311-36d | 1,2,4-7 | INV. C01B33/18 C09C1/00 C09C1/30 C09C3/00 C09C3/08 C09C3/12 C08K3/36 |
| Y | * alinéa [experimental] - alinéa [conclusions] * | 8-10 | |
| | ----- | | |
| X | US 10 557 040 B2 (AIRBUS GROUP SAS [FR]; PYLOTE [FR] ET AL.) 11 février 2020 (2020-02-11) | 1-7,10 | |
| Y | * colonne 4, ligne 53 - colonne 14 * | 8,9 | |
| | ----- | | |
| X | US 2006/257650 A1 (DOLLASE THILO [DE] ET AL) 16 novembre 2006 (2006-11-16) | 1-7 | |
| Y | * alinéas [0019] - [0130]; figures 1-5 * * tableau 1 * | 8-10 | |
| | ----- | | |
| X | US 11 370 896 B2 (UNIV CORNELL [US]; UNIV MONS [BE]) 28 juin 2022 (2022-06-28) | 1-7 | |
| Y | * colonne 2, ligne 61 - colonne 13 * * exemples 1-2 * | 8-10 | |
| | ----- | | |
| | -/-- | | |

DOMAINES TECHNIQUES RECHERCHES (IPC)

C01B
C09C
C08K

Le présent rapport a été établi pour toutes les revendications

1

| Lieu de la recherche | Date d'achèvement de la recherche | Examinateur |
|---|---|---|
| La Haye | 16 avril 2026 | Marino, Emanuela |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 25 21 7414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2017/207913 A1 (ECOLE SUPERIEURE PHYSIQUE & CHIMIE IND VILLE DE PARIS [FR] ET AL.) 7 décembre 2017 (2017-12-07)<br>* exemples 1-14 *<br>----- | 1-10 | |
| Y | SAMIR EL HANKARI ET AL: "Guanidinium vs. Ammonium Surfactants in Soft-Templating Approaches: Nanostructured Silica and Zwitterionic i-Silica from Complementary Precursor-Surfactant Ion Pairs", EUROPEAN JOURNAL OF INORGANIC CHEMISTRY, WILEY-VCH VERLAG , WENHEIM, DE, vol. 2012, no. 32, 26 juillet 2012 (2012-07-26), pages 5288-5298, XP072126836, ISSN: 1434-1948, DOI: 10.1002/EJIC.201200419<br>* figures scheme 1-5 *<br>* page 5290, alinéa results - page 5298, alinéa experimental; figure 11 *<br>----- | 1-10 | |

DOMAINES TECHNIQUES RECHERCHES (IPC)

Le présent rapport a été établi pour toutes les revendications

1

| Lieu de la recherche | Date d'achèvement de la recherche | Examinateur |
|---|---|---|
| La Haye | 16 avril 2026 | Marino, Emanuela |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 2 de 2

## ANNEXE AU RAPPORT DE RECHERCHE EUROPEENNE RELATIF A LA DEMANDE DE BREVET EUROPEEN NO.

EP 25 21 7414

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2026

| Document brevet cité au rapport de recherche | Date de publication | Membre(s) de la famille de brevet(s) | Date de publication |
|---|---|---|---|
| US 10557040 B2 | 11-02-2020 | CN 108307634 A | 20-07-2018 |
| | | EP 3234030 A1 | 25-10-2017 |
| | | FR 3029835 A1 | 17-06-2016 |
| | | US 2017327695 A1 | 16-11-2017 |
| | | WO 2016097570 A1 | 23-06-2016 |
| US 2006257650 A1 | 16-11-2006 | DE 102005022782 A1 | 16-11-2006 |
| | | EP 1883686 A2 | 06-02-2008 |
| | | EP 3235888 A2 | 25-10-2017 |
| | | JP 2008540750 A | 20-11-2008 |
| | | US 2006257650 A1 | 16-11-2006 |
| | | US 2011039970 A1 | 17-02-2011 |
| | | WO 2006120136 A2 | 16-11-2006 |
| US 11370896 B2 | 28-06-2022 | EP 3509732 A1 | 17-07-2019 |
| | | US 2019233613 A1 | 01-08-2019 |
| | | WO 2018049379 A1 | 15-03-2018 |
| WO 2017207913 A1 | 07-12-2017 | CA 3026003 A1 | 07-12-2017 |
| | | CN 109195976 A | 11-01-2019 |
| | | EP 3464300 A1 | 10-04-2019 |
| | | FR 3051792 A1 | 01-12-2017 |
| | | JP 7211819 B2 | 24-01-2023 |
| | | JP 2019519538 A | 11-07-2019 |
| | | US 2020231605 A1 | 23-07-2020 |
| | | US 2022227790 A1 | 21-07-2022 |
| | | WO 2017207913 A1 | 07-12-2017 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 11370896 B2